(19) Europäisches Patentamt
European Patent Office
Office européen des brevets

(11) **EP 1 532 411 B1**

(12) **FASCICULE DE BREVET EUROPEEN**

(45) Date de publication et mention
de la délivrance du brevet:
**05.01.2011 Bulletin 2011/01**

(51) Int Cl.:
***F26B 9/10*** *(2006.01)*     ***F26B 3/28*** *(2006.01)*
***F26B 25/04*** *(2006.01)*

(21) Numéro de dépôt: **03758276.4**

(22) Date de dépôt: **26.08.2003**

(86) Numéro de dépôt international:
**PCT/FR2003/002582**

(87) Numéro de publication internationale:
**WO 2004/020922 (11.03.2004 Gazette 2004/11)**

(54) **DISPOSITIF DE SECHAGE DE PRODUITS TELS QUE NOTAMMENT DES BOUES DE STATIONS D EPURATION**

VORRICHTUNG ZUM TROCKNEN VON PRODUKTEN WIE INSBESONDERE KLÄRANLAGENSCHLAMM

DEVICE FOR DRYING PRODUCTS SUCH AS IN PARTICULAR PURIFYING STATION SLUDGE

(84) Etats contractants désignés:
**AT BE BG CH CY CZ DE DK EE ES FI FR GB GR HU IE IT LI LU MC NL PT RO SE SI SK TR**

(30) Priorité: **28.08.2002 FR 0210693**

(43) Date de publication de la demande:
**25.05.2005 Bulletin 2005/21**

(73) Titulaire: **DEGREMONT**
**92508 Rueil-Malmaison Cédex (FR)**

(72) Inventeurs:
• **KOLEGA, Stiv**
**F-95270 Chaumontel (FR)**
• **LUBOSCHIK, Ulrich**
**79400 Kandern-Wollbach (DE)**

(74) Mandataire: **Michardière, Bernard et al**
**Cabinet Armengaud Aîné**
**3, Avenue Bugeaud**
**75116 Paris (FR)**

(56) Documents cités:
EP-A- 1 150 083    WO-A-01/06190
WO-A-01/06191    CH-A- 684 771
DE-A- 2 406 213    DE-A- 4 315 321
DE-A- 19 836 268    FR-A- 2 309 814
FR-A- 2 637 968    JP-A- 57 153 189
US-A- 2 279 848    US-A- 5 065 528

• BUX M ET AL: "VOLUME REDUCTION AND BIOLOGICAL STABILIZATION OF SLUDGE IN SMALL SEWAGE PLANTS BY SOLAR DRYING" DRYING TECHNOLOGY, MARCEL DEKKER, NEW YORK, US, vol. 20, no. 4/5, 2002, pages 829-837, XP001116921 ISSN: 0737-3937
• PATENT ABSTRACTS OF JAPAN vol. 016, no. 464 (M-1316), 28 septembre 1992 (1992-09-28) & JP 04 165287 A (KANEKO AGRICULT MACH CO LTD), 11 juin 1992 (1992-06-11)
• LUBOSCHIK U: "SOLRE SCHLAMMTROCKNUNG NACH DEM IST VERFAHREN. -SEIT DREI JAHREN ERPROBUNG IN DER PRAXIS.- SOLAR SLUDGE DRYING BASED ON THE IST PROCESS. - PROCESS THREE YEARS ON TEST IN THE PRACTICE.-" AT - AUFBEREITUNGS TECHNIK - MINERAL PROCESSING, AT VERLAG FUER AUFBEREITUNGS, WIESBADEN, DE, vol. 39, no. 1, 1998, pages 25-28, XP000730396 ISSN: 1434-9302

## Description

La présente invention concerne le séchage de déchets, notamment de boues provenant de stations de traitements d'épuration d'eaux résiduaires urbaines ou industrielles et elle se propose d'apporter un dispositif de séchage mettant en oeuvre l'énergie solaire (voir par exemple DE-A-4315321).

On sait que les boues d'épuration constituent des déchets inévitables lors du traitement de l'eau : chaque individu en produit en moyenne environ 20 kilos par an, ce qui représente pour l'Europe plus de 10 millions de tonnes par an, exprimées en Matières Sèches, soit 50 millions de tonnes de boues brutes lorsque l'on fait référence aux boues dites "humides" qui sont composées de 20% de Matières Sèches et de 80% d'eau.

A l'heure actuelle plusieurs destinations sont possibles pour ces boues, notamment : la mise en décharge, l'incinération et l'épandage agricole : dans chacun de ces cas le séchage des boues apparaît comme une étape incontournable qui permet de réduire d'un facteur 4 les volumes à stocker, à transporter et à éliminer. Cependant, compte tenu de nombreuses contraintes (en particulier techniques, sanitaires, réglementaires...) de telles filières d'évacuation des boues sont de plus en plus complexes, donc de plus en plus chères et elles peuvent même être localement remises en cause voir même interdites.

On conçoit que ce séchage constitue à l'heure actuelle un marché en pleine croissance et qu'il représente une part notable du coût résultant des processus d'élimination/valorisation des déchets que représentent les boues biologiques issues des stations d'épuration des eaux résiduaires. Cette part est d'autant plus grande dans le budget de la station d'épuration que celle-ci est de faible capacité.

La plupart des installations de séchage des boues sont des installations dites "de séchage thermique". Elles sont de grandes consommatrices d'énergie (environ 1000 kWh par tonne d'eau évaporée), fossile en particulier et elles exigent la présence de personnels qualifiés et des investissements importants. De ce fait, ces solutions selon l'état actuel de la technique sont, économiquement parlant, mal adaptées aux stations de petite ou moyenne capacité.

On a également envisagé de mettre en oeuvre un séchage des boues par rayonnement solaire, cette technique présentant l'avantage d'utiliser une énergie renouvelable et une technologie de construction simple relevant de la conception des serres de type horticole. Afin d'améliorer les performances de séchage de telles installations solaires, les serres sont généralement munies de moyens assurant le retournement de la boue à sécher, voire sa progression le long de l'installation de séchage. Ainsi, le produit à sécher présente toujours une surface humide au contact de l'air, évitant ainsi la formation d'une "croûte" à la surface du lit de boues et permettant d'améliorer le rendement d'évaporation de l'eau lors du traitement de séchage.

Les réalisations de sécheurs solaires connues à ce jour, assurent l'extraction de la vapeur d'eau résultant du séchage progressif des boues par des phénomènes connus de convection naturelle, induite par les différences de densité de l'air dans la serre (ces différences étant dues aux gradients de température et d'hygrométrie); les sécheurs solaires de ce type sont parfois munis de ventilateurs afin d'assurer une circulation et un renouvellement forcés de l'atmosphère gazeuse du sécheur (convection forcée).

Dans les installations connues, ces ventilateurs sont situés à la partie supérieure de la serre (c'est-à-dire "en toiture") et ils sont dimensionnés de façon à prévoir un certain taux de renouvellement du volume total de l'air contenu dans la serre. De ce fait, le coût du poste "ventilation forcée" représente entre 25 et 50% des consommations électriques liées au fonctionnement du sécheur. Or, les études d'optimisation auxquelles il a été procédé montrent que c'est le renouvellement de la couche d'air au contact immédiat du lit de boues à sécher qui a le plus de répercussions sur l'efficacité du processus d'évaporation.

Le dimensionnement d'un dispositif de séchage solaire est lié aux facteurs météorologiques du site d'implantation de ce dispositif. Par ailleurs, l'opérabilité des équipements de séchage est extrêmement limitée la nuit et en période hivernale : la disponibilité annuelle, essentiellement diurne, ne dépassant pas 30% du temps. En outre, il est d'usage de considérer que, dans les régions tempérées, 70% de la quantité d'eau annuelle présente dans les boues est évaporée pendant les 3 mois les plus chauds de l'année.

Ces divers impératifs obligent à surdimensionner notablement les installations en prévoyant de grandes superficies pour sécher des quantités de boues relativement faibles. En fonction des régions d'implantation, d'une part, et du degré d'optimisation des procédés mis en oeuvre d'autre part, la surface installée d'un sécheur solaire oscille entre 0,3 et 1 $m^2$ de serre par tonne de boues à traiter et par an (siccité initiale 25% et siccité finale 75%).

Le fonctionnement des équipements de séchage solaire est avantageusement asservi aux variations d'un ou de plusieurs paramètres tels que notamment : le rayonnement solaire mesuré, la température de l'air, l'humidité de l'air à l'intérieur et à l'extérieur de la serre.

Le système est donc activé en fonction du pouvoir asséchant de l'air, sans tenir compte de la pression partielle de vapeur d'eau à la surface de la boue.

Un autre inconvénient des solutions selon la technique antérieure de ce séchage solaire réside en ce que l'alimentation de la boue, à l'une des extrémités du sécheur est réalisée à l'aide d'un engin mobile de chargement du type "Tractopelle", muni d'un godet mobile. La boue est déposée en tas plus ou moins réguliers à l'entrée de la serre, sans que la surface du dépôt de boues soit réellement optimisée et intégrée à la zone de séchage.

Partant de l'état de la technique mentionné ci-dessus, la présente invention se propose d'apporter une installation de séchage solaire permettant notamment de réduire le temps de séchage tout en dépensant moins d'énergie.

En conséquence l'invention concerne un dispositif de séchage de produits tels que notamment des boues provenant de stations d'épuration d'eaux résiduaires urbaines ou industrielles mettant en oeuvre l'énergie solaire, réalisé sous la forme d'une serre comportant une dalle ou plancher sur lequel est déposé le lit de boues à sécher, des moyens étant prévus pour assurer le retournement des boues épandues sur ledit plancher et leur progression le long du dispositif de séchage, ce dernier comporte en outre des ventilateurs pour assurer le renouvellement de l'air contenu dans ladite serre, caractérisé en ce que lesdits ventilateurs sont positionnés sur les moyens assurant le retournement et la progression du lit de boues.

Selon une autre caractéristique de la présente invention, on prévoit en outre un système d'aspiration et de refoulement de l'air, disposé en partie haute de la serre.

D'autres caractéristiques et avantages de la présente invention ressortiront de la description faite ci-après en référence aux dessins annexés qui en illustrent des exemples de réalisation dépourvus de tout caractère limitatif. Sur les dessins :

- la figure 1 est une vue schématique en perspective d'un dispositif de séchage selon la présente invention;
- la figure 2 est une vue, à échelle agrandie, en coupe par un plan vertical, du dispositif de la figure 1;
- la figure 3 illustre un autre mode de réalisation de l'invention, en coupe verticale et
- la figure 4 est une vue similaire à la figure 1 d'un autre exemple de réalisation du dispositif de séchage selon l'invention.

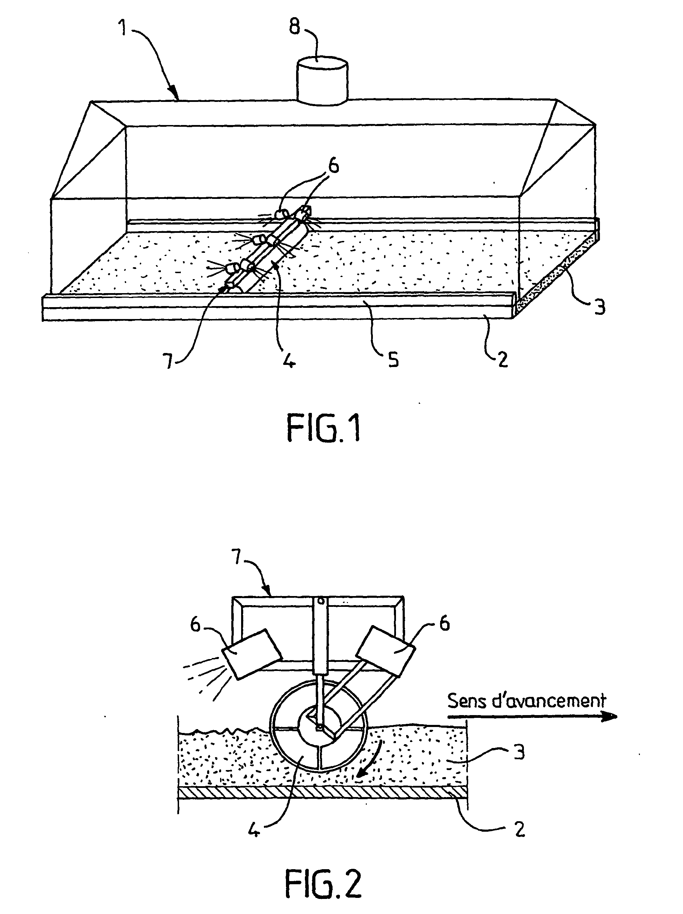

On se réfère en premier lieu à la figure 1 sur laquelle on a représenté en 1 la serre du dispositif de séchage qui est implantée sur la dalle 2 sur laquelle est épandu le lit de boues 3 à sécher. Des murets tels que 5 délimitent latéralement la surface sur laquelle est positionné le lit de boues. Sur cette figure 1, la référence 4 désigne le dispositif assurant le retournement et le cheminement du lit de boues 3 sur le plancher 2.

Selon l'invention, les ventilateurs 6 qui assurent le renouvellement de l'air contenu dans la serre 1, sont positionnés sur le châssis motorisé 7 du dispositif 4 lequel est réalisé par exemple sous la forme d'une machine de scarification. Grâce à cette disposition, on optimise le renouvellement de l'air au contact des boues à sécher : on comprend que, seul l'air au contact du lit de boues 3 capte l'humidité de la boue. La proximité des ventilateurs du lit 3 permet de réduire la "couche limite" résultant de l'écoulement de l'air au-dessus de la surface du lit 3. Le fait de prévoir les ventilateurs 6 sur le châssis de la machine de scarification 4 permet, quel que soit le sens d'avancement de la machine de scarification, que la ventilation s'effectue toujours sur le produit nouvellement remué. Selon l'invention, on peut prévoir un système de basculement électrique de fin de course permettant de sélectionner les ventilateurs devant être actionnés afin d'optimiser les résultats du séchage.

Outre l'avantage mentionné ci-dessus qui consiste à optimiser le renouvellement de l'air au contact de la boue, l'invention permet d'accélérer les vitesses d'air au contact de la boue, ce qui permet de réduire le temps de séchage tout en dépensant moins d'énergie, le flux d'air étant focalisé sur la zone de séchage au lieu d'être dispersé dans tout le volume de la serre, comme c'est le cas dans les systèmes de séchage selon l'état antérieur de la technique.

Ainsi, une serre dans laquelle on insuffle de l'air à raison de 30 000 m$^3$/h, au travers d'une ouverture de 35 m$^2$ donne une vitesse d'air moyenne de 0,24 m/s (hors convection naturelle). Le même débit, réalisé selon l'invention à proximité du lit de boues (les ventilateurs 6 étant disposés à une distance de l'ordre de 1 à 1,50 m de la surface de ce dernier), permet d'augmenter de 2 à 4 fois la vitesse de l'air au contact de la surface humide du lit de boues.

On comprend que dans le dispositif selon l'invention, l'air balaye la boue dès que celle-ci est brassée, la boue étant alors à une température plus élevée que l'atmosphère ambiante (effet "corps noir" du lit de séchage), ce qui permet d'augmenter les différences de pression de vapeur entre la boue retournée et l'air. Le renouvellement de l'air dans l'enceinte de séchage s'effectue par convection naturelle, d'autant plus efficace que l'air sera chargé d'humidité et donc plus léger.

Selon la présente invention, afin d'assurer une gestion contrôlée des flux d'air dans la serre on peut prévoir un système d'aspiration et de refoulement de l'air schématisé en 8 sur la figure 1, qui assure un renouvellement permanent du milieu.

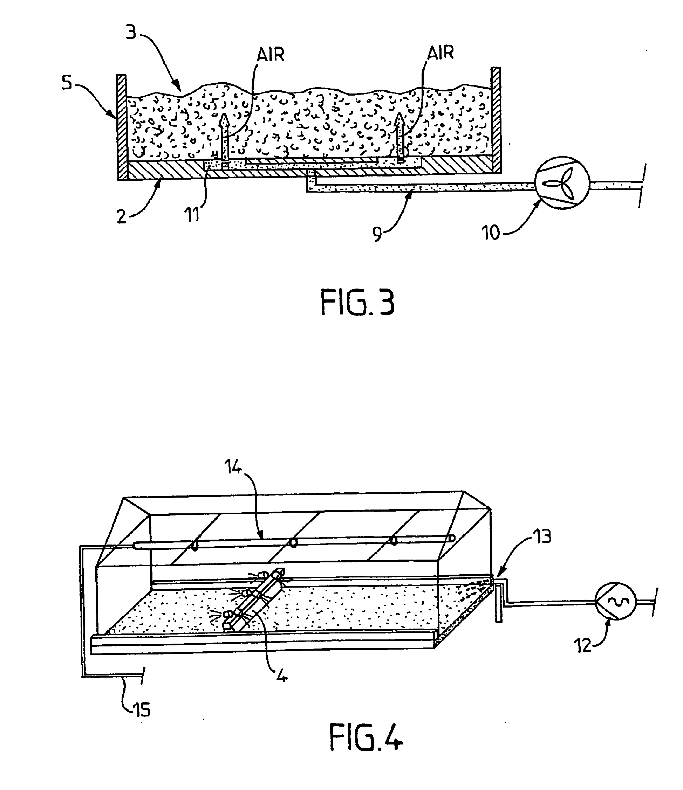

Selon l'invention, on peut également prévoir un système additionnel de ventilation par le sol. Ce système est représenté sur la figure 3 sur laquelle la référence 9 désigne une conduite d'amenée d'air sous l'effet d'un ventilateur 10, cette conduite débouchant au travers du lit de boues 3 par l'intermédiaire d'une membrane géotextile 11. Ce système est implanté dans la seconde moitié du trajet des boues dans le dispositif de séchage, c'est-à-dire à un endroit où les boues sont déjà suffisamment déshydratées pour présenter une structure granuleuse donc non colmatante. Le fait, selon l'invention, d'injecter l'air au travers d'une membrane géotextile permet d'extraire rapidement une fraction importante de l'humidité interstitielle de la boue, cette humidité étant immédiatement entraînée par le balayage d'air induit par les ventilateurs 6 montés sur le châssis de la machine de scarification 4. Les prototypes réalisés selon la présente invention ont permis de vérifier que les débits d'air mis en jeu sont faibles, de l'ordre de 0,05 à 5 m³/m²/s, afin de limiter les vitesses d'air à des valeurs inférieures à celle de la vitesse d'envol des poussières.

Selon la présente invention, le fonctionnement (mise en service et arrêt) et l'asservissement de l'ensemble de la motorisation (machine de scarification 4, ventilateurs 6, 10 et moyens d'aspiration et de refoulement de l'air 8) pourront être corrélés à la mesure de la température de la surface du lit de boues 3, effectuée à l'aide de méthodes de prise de température à distance mettant en oeuvre par exemple des détecteurs infrarouges. On peut également prendre en compte la différence de températures entre la surface du lit de séchage et l'atmosphère présente dans la serre de séchage, la mise en route des équipements n'intervenant par exemple que si cette différence de températures est d'au moins 3°C c'est-à-dire :

$$T = (T_{\text{lit de séchage}} - T_{\text{atmosphère}}) \geq + 3°C$$

Selon la présente invention, on peut également mesurer la teneur en humidité relative de l'atmosphère extérieure à la serre de séchage et imposer une consigne de mise en service de l'ensemble de la motorisation lorsque cette humidité relative est inférieure à 80%, par exemple.

Enfin, on peut également coupler les mesures de la différence de température T°C spécifiée ci-dessus et d'humidité relative extérieure de manière que la première de ces deux valeurs qui atteint un point de consigne prédéterminé déclenche la mise en route des équipements de l'installation.

Dans la variante illustrée par la figure 4, on a prévu un système d'alimentation des boues mettant en oeuvre une pompe volumétrique 12 et un système de répartition et de dispersion des boues 13, de façon à optimiser la répartition des boues à l'entrée du dispositif de séchage, la zone de desserte étant utilisée comme espace de séchage. Le système de répartition 13 permet de déposer la boue en couche uniforme sur toute la largeur de la serre du côté de la zone de desserte, de manière contrôlée et automatisée en fonction des besoins.

Selon la présente invention, on peut également mettre en oeuvre des panneaux radiants, des tubes radiants ou tout autre système de chauffage de bâtiments de grands volumes, pour assurer, le chauffage de la surface du lit de boues.

Dans l'exemple de réalisation illustré par la figure 4, on a représenté en 14 un tube radiant. L'énergie utilisée pour le chauffage du tube peut être un gaz combustible (amené par une conduite telle que 15) ou du biogaz ou bien encore un moyen de production de l'électricité à partir d'énergie renouvelable ou non.

La mise en oeuvre de cette technique de chauffage radiant présente l'intérêt de chauffer la boue par l'effet du rayonnement infrarouge, la chaleur étant transmise essentiellement à la surface du lit de boue (3) sans réchauffer sensiblement l'air environnant. Les volumes d'air déplacés par la convection naturelle ou forcée affecteront relativement peu l'élévation de température de la surface du lit de boues. Le rayonnement infrarouge ainsi produit permettra de simuler l'effet solaire 24h/24, quelles que soient la période de l'année, les conditions météorologiques etc... La surface installée de tels dispositifs de séchage pourra, dans ce cas, être réduite d'un facteur 1,5 à 3.

**Revendications**

1. Dispositif de séchage de produits tels que notamment des boues provenant de stations d'épuration d'eaux résiduaires urbaines ou industrielles mettant en oeuvre l'énergie solaire, réalisé sous la forme d'une serre (1) comportant une dalle ou plancher (2) sur lequel est déposé le lit (3) de boues à sécher, des moyens (4) étant prévus pour assurer le retournement des boues épandues sur ledit plancher et leur progression le long du dispositif de séchage, ce dernier comporte en outre des ventilateurs pour assurer le renouvellement de l'air contenu dans ladite serre, **caractérisé en ce que** lesdits ventilateurs (6) sont positionnés sur les moyens (4) assurant le retournement et la progression du lit de boues.

2. Dispositif selon la revendication 1 **caractérisé en ce qu'**il comporte en outre un système d'aspiration et de refoulement de l'air (8), disposé en partie haute de la serre (1).

3. Dispositif selon l'une des revendications 1 ou 2 **caractérisé en ce qu'**il comporte un système additionnel de ventilation par le sol (10, 9, 11) implanté dans la seconde moitié du trajet des boues dans le dispositif.

4. Dispositif selon la revendication 3 **caractérisé en ce que** ledit système additionnel de ventilation par le sol comprend un ventilateur (10) soufflant de l'air dans une conduite (9) débouchant au travers de la dalle (2) par l'intermédiaire d'une membrane géotextile (11).

5. Dispositif selon l'une quelconque des revendications précédentes **caractérisé en ce qu'**il comporte des moyens pour corréler le fonctionnement, c'est-à-dire la mise en marche et l'arrêt, et l'asservissement de l'ensemble de la motorisation, à la mesure de la température de la surface du lit de boues (3).

6. Dispositif selon la revendication 5 **caractérisé en ce que** lesdits moyens de corrélation prennent également en compte la différence de température entre la surface du lit de boues à sécher et l'atmosphère présente dans l'installation de séchage, la mise en route des équipements n'intervenant que lorsque cette différence de température atteint un point de consigne prédéterminé.

7. Dispositif selon l'une des revendications 5 ou 6 **caractérisé en ce que** l'on mesure la teneur en humidité relative de l'atmosphère extérieure à la serre de séchage et l'on impose une consigne de mise en route lorsque cette humidité est inférieure à un point de consigne prédéterminé.

8. Dispositif selon l'une quelconque des revendications 5 à 7 **caractérisé en ce que** l'on couple les mesures de différences de température et d'humidité relative de l'atmosphère extérieure de manière que la première de ces deux valeurs qui atteint un point de consigne prédéterminé déclenche la mise en route des équipements.

9. Dispositif selon l'une quelconque des revendications précédentes **caractérisé en ce qu'**il comporte un système d'alimentation des boues par pompe volumétrique (12) et moyen de répartition (13) permettant de disperser et de déposer les boues en couche uniforme sur toute la largeur de la serre.

10. Dispositif selon l'une quelconque des revendications précédentes **caractérisé en ce qu'**il comporte en outre, un système de chauffage, notamment panneaux ou tubes radiants, permettant de chauffer la surface supérieure du lit de boues par rayonnement infrarouge.

## Claims

1. A device for drying products, such as in particular sludge originating from plants for the treatment of municipal or industrial wastewater, employing solar energy produced in the form of a greenhouse (1) comprising a slab or floor (2) on which the bed (3) of sludge to be dried is deposited, means (4) being provided for ensuring that the sludge spread over said floor is turned over and that it is progressed along the drying device, the latter additionally comprising fans to provide for the renewal of the air present in said greenhouse, **characterized in that** said fans (6) are positioned over the means (4) which ensure that the bed of sludge is turned over and progressed.

2. The device as claimed in claim 1, **characterized in that** it additionally comprises a system for sucking up and forcing back the air (8) positioned in the top part of the greenhouse (1).

3. The device as claimed in either of claims 1 and 2, **characterized in that** it comprises an additional system for ventilation via the ground (10, 9, 11) installed in the second half of the route followed by the sludge in the device.

4. The device as claimed in claim 3, **characterized in that** said additional system for ventilation via the ground comprises a fan (10) which blows air into a pipe (9) which emerges through the slab (2) via a geotextile membrane (11).

5. The device as claimed in any one of the preceding claims, **characterized in that** it comprises means for correlating the operation, that is to say the start up and shut down, and the automatic control of all the motorized components with measurement of the temperature of the surface of the bed of sludge (3).

6. The device as claimed in claim 5, **characterized in that** said correlation means also take into account the difference in temperature between the surface of the bed of sludge to be dried and the atmosphere present in the drying plant, the equipment only being started up when this temperature difference reaches a predetermined set point.

7. The device as claimed in either of claims 5 and 6, **characterized in that** the relative humidity content of the atmosphere outside the drying greenhouse is measured and a set value for starting up is laid down when this humidity is less than a predetermined set point.

8. The device as claimed in any one of claims 5 to 7, **characterized in that** the measurements of temperature difference and of relative humidity of the external atmosphere are coupled so that the first of these two values which reaches a predetermined set point triggers the start up of the equipment.

9. The device as claimed in any one of the preceding claims, **characterized in that** it comprises a system for feeding the sludge via a metering pump (12) and distribution means (13) which makes it possible to disperse and to deposit the sludge in a uniform layer over the entire width of the greenhouse.

10. The device as claimed in any of the preceding claims, **characterized in that** it additionally comprises a heating system, in particular radiant panels or pipes, which makes it possible to heat the upper surface of the bed of sludge by infrared radiation.

**Patentansprüche**

1. Vorrichtung zum Trocknen von Produkten wie insbesondere von aus Anlagen zum Reinigen von kommunalen oder industriellen Abwässern stammenden Schlämmen, unter Verwendung von Sonnenenergie, ausgeführt in Form eines Treibhauses (1), das eine Platte oder einen Boden (2) umfasst, auf dem die Schicht (3) von zu trocknenden Schlämmen abgelagert wird, wobei Mittel (4) zum Sicherstellen des Wendens der auf besagtem Boden ausgebreiteten Schlämme und ihrer Förderung entlang der Trocknungsvorrichtung vorgesehen sind, wobei die letztere außerdem Gebläse zum Sicherstellen der Erneuerung der in besagtem Treibhaus enthaltenen Luft umfasst, **dadurch gekennzeichnet, dass** die besagten Gebläse (6) über den Mitteln (4) zum Wenden und Fördern der Schlammschicht angeordnet sind.

2. Vorrichtung nach Anspruch 1, **dadurch gekennzeichnet, dass** sie außerdem ein Mittel (8) zum Ansaugen und Verdrängen von Luft umfasst, das im Oberteil des Treibhauses (1) angeordnet ist.

3. Vorrichtung nach einem der Ansprüche 1 oder 2, **dadurch gekennzeichnet, dass** sie ein zusätzliches System (10, 9, 11) zum Belüften vom Boden aus umfasst, das in der zweiten Hälfte der Durchlaufstrecke der Schlämme in der Vorrichtung eingesetzt ist.

4. Vorrichtung nach Anspruch 3, **dadurch gekennzeichnet, dass** besagtes zusätzliches System zum bodenseitigen Belüften ein Gebläse (10) umfasst, das Luft in eine Leitung (9) bläst, die durch die Platte (2) unter Zwischenschaltung einer geotextilen Membran (11) ausmündet.

5. Vorrichtung nach einem der vorstehenden Ansprüche, **dadurch gekennzeichnet, dass** sie Mittel zum Korrelieren des Betriebs, d. h. des Anlaufens und des Anhaltens, und der Steuerung der Gesamtheit der Antriebe mit der Messung der Temperatur der Oberfläche der Schlammschicht (3) umfasst.

6. Vorrichtung nach Anspruch 5, **dadurch gekennzeichnet, dass** die besagten Korrelierungsmittel auch die Differenz der Temperaturen zwischen der Oberfläche der Lage des zu trocknenden Schlammes und der in der Trocknungsanlage herrschenden Atmosphäre berücksichtigen, wobei das Einschalten der Ausrüstungen nur dann stattfindet, wenn diese Temperaturdifferenz einen vorbestimmten Sollwert erreicht.

7. Vorrichtung nach einem der Ansprüche 5 oder 6, **dadurch gekennzeichnet, dass** man den relativen Feuchtegehalt der Atmosphäre außerhalb des Trocken-Treibhauses misst und dass man einen Sollwert zum Einschalten vorgibt, wenn diese Feuchte geringer als ein vorbestimmter Sollwert ist.

8. Vorrichtung nach einem der Ansprüche 5 bis 7, **dadurch gekennzeichnet, dass** man die Messungen der Temperaturunterschiede und der relativen Feuchte der Außen-Atmosphäre so koppelt, dass der erste dieser beiden Werte, der einen vorbestimmten Sollwert erreicht, das Einschalten der Ausrüstungen auslöst.

9. Vorrichtung nach einem der vorstehenden Ansprüche, **dadurch gekennzeichnet, dass** sie ein System zum Zuführen von Schlämmen mittels einer Verdrängerpumpe (12) und eines Verteilers (13) umfasst, das es erlaubt, die Schlämme als gleichmäßige Schicht auf der gesamten Breite des Treibhauses zu verteilen und abzulagern.

10. Vorrichtung nach einem der vorstehenden Ansprüche, **dadurch gekennzeichnet, dass** sie außerdem ein System zum Heizen, insbesondere Platten oder Strahlrohre, umfasst, welche es erlauben, die obere Oberfläche der Schlammlage durch infrarote Strahlung zu beheizen.

FIG.1

Sens d'avancement

FIG.2

FIG.3

FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 4315321 A